# EUROPEAN PATENT SPECIFICATION

(11) **EP 1 614 576 B1**
(45) Date of publication and mention of the grant of the patent: **25.10.2006**
(21) Application number: 04380140.6
(22) Date of filing: 08.07.2004
(51) Int. Cl.: B60K 23/02

(54) **Vehicle clutch assistance system**
Kupplungsunterstützung
Dispositif d'assistance de commande d'embrayage

(43) Date of publication of application: 11.01.2006
(73) Proprietor: Autotech Engineering, A.I.E., 48220 Abadino (Vizcaya) (ES)
(72) Inventor: Castillo Gonzales, Jaime, Autotech Eng., A.I.E., 48220 Abadino (ES); Darmon, Francois Denis, Autotech Eng., A.I.E., 48220 Abadino (ES)
(74) Representative: Carpintero Lopez, Francisco

(56) References cited:
- EP-A- 1 094 234
- DE-A- 19 650 577
- DE-A- 19 919 339
- US-A- 2 136 542

## Description

### OBJECT OF THE INVENTION

The present invention refers to a new vehicle clutch assistance system intended to fulfil an assistance curve that presents a change of curvature at its end part, going from a concave assistance curve for most of the pedal travel to a convex assistance curve in the final section.

Likewise object of the invention is a clutch assistance system that includes two parallel compression springs occupying a minimum space which make it possible to obtain the aforesaid assistance curve.

### BACKGROUND OF THE INVENTION

The function performed by clutch pedal assistance in motor vehicle pedal assemblies is to provide a given sensation during clutch engagement, a sensation that normally depends on the type of power plant and the features of the hydraulic control system and the ergonomic characteristics required. This sensation usually consists of offering a certain resistance to foot pressure during an initial part of clutch pedal travel and aid or resistance to clutch release during another part of this travel.

To achieve this assistance effect during clutch engagement, pedal assemblies usually have a linear compression spring fitted between two plastic bases that slide in relation to each other during pedal travel. One of the two bases rests on one of the fixed pedal assembly supports and the other is integral with the actual clutch, so that when the pedal is depressed separation takes place between the two bases, a movement which is aided by the assistance of the compression spring.

In a few cases, the assistance effect is achieved by using tension springs.

Japanese Patent n° 5555022 describes a system of this type that includes a spring that offers resistance both at the start and during the rest of pedal travel but has the drawback that, in order to increase the assistance it is necessary to raise the spring force, so that the resistance offered at the start of travel is increased as a consequence.

To overcome this problem, Japanese Patent n° 6139635 includes a second spring that provides assistance throughout the whole travel, so that the sum of the effects of the two springs provides an assistance curve with an initial resistive part of lesser magnitude and a second part with greater assistance. This system has the disadvantage that the change from resistance to assistance is advanced and, therefore, pedal return is slower. In addition, the sensation when depressing the pedal is not so good as the depressing force is not constant throughout pedal travel.

We may also cite US Patent n° 5,165,299 showing the features of the preamble of claim 1 aimed at overcoming the foregoing problem. In this Patent, the first spring acts during an initial section in one direction, resistance for example, and in the opposite direction in the next direction, assistance for example, while in the second section it does not act, and in a third section it would act in resistance.

To achieve the foregoing operation, the device of this Patent uses two springs, assisted by two cams, which results in an overcomplicated mechanism and working.

The effect produced by the assistance system is usually represented as clutch assistance curves, the x-axis of which refers to pedal travel, while the y-axis refers to the torque, in relation to the pedal shaft, that has to be applied to the pedal pad to balance the moment exerted by the assistance. The curve has a positive section that corresponds to the initial interval of pedal travel in which the assistance offers resistance to clutch engagement, while the negative section of the curve corresponds to the interval in which the assistance aids and facilitates clutch engagement.

Assistance curves are usually tangency continuous at all times, which means that they generally have less assistance capacity at the end of pedal travel.

Today, the appearance of new more powerful, higher torque power plants forces the driver to make more effort when pressing the pedal, so it has become necessary to bring in new types of assistance that provide more aid towards the end of pedal travel. This means a sudden change in the rigidity of the assistance in the end part and, therefore, a sudden change in the form of the assistance curve, which should present a discontinuity.

Curves of this type make more constant support available especially during the final part of clutch pedal travel, thereby avoiding the fade effect that usually appears in conventional assistance systems.

### DESCRIPTION OF THE INVENTION

To overcome the problem situation explained, the assistance system in accordance with claim 1 proposes the use of two compression springs, in a parallel layout, so that during most of the pedal travel the assistance curve is the sum of the curves that would be originated individually by both springs, while at the final part one of the springs reaches its natural length and ceases to provide its assistance action, with the result that in this final section the assistance curve is the one originated by one of the springs only.

Specifically, the assistance system is made up of two plastic bases, one of which is jointed to the pedal assembly bracket, while the other is jointed to the actual pedal, being able to slide in relation to the base fixed to the bracket, and between which are disposed the two compression springs, fitted one inside the other.

One of the springs has a smaller free length than the other, so that it ceases to act in a given position of the pedal, through no longer being compressed, and assistance takes place solely due to the effect of the other spring that still remains compressed, with the ability to act.

In the initial pedal rest position the axis of the springs is above the axis of the pedal, so that until both axes are aligned, the assistance moment brought about by the force of the springs is positive, creating resistance to pedal movement, while as of the time when the axes are aligned, the moment produced by the springs is negative and, therefore, assists pedal travel.

As stated, during a first part of the assistance the effects of the two springs are added until such time as one of them ceases to act, so that the assistance is solely attributable to the other spring. In this way, an assistance curve is achieved with a discontinuity at the time that one of the springs ceases to act, which determines a second part of the curve with an enhanced resistance in comparison with current systems but at the same time maintaining the assistance provided in the first part of the curve.

In addition, as the springs are arranged parallel, one inside the other, the space needs required for installing the assistance system on the pedal assembly are reduced.

### DESCRIPTION OF THE DRAWINGS

To supplement the description being offered and in order that the features of the invention may be more clearly understood, in accordance with a preferred practical embodiment of same a set of drawings is attached as an integral part of said description, wherein, for informative and non-restrictive purposes, the following has been represented:
Figure 1.- It shows the assistance curve endowed with a point of change of curvature in its final section (change of the form of the assistance curve from concave to convex in its final part) as well as the assistance curves generated by each spring separately. The sum of both curves gives the whole curve as a result.

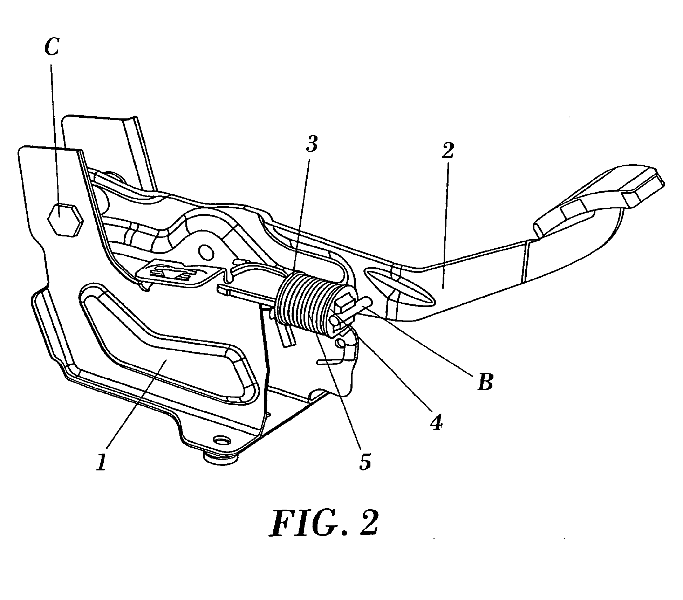

Figure 2.- It shows an overall perspective view of a pedal assembly assistance system with a parallel spring layout, in accordance with the object of the invention.

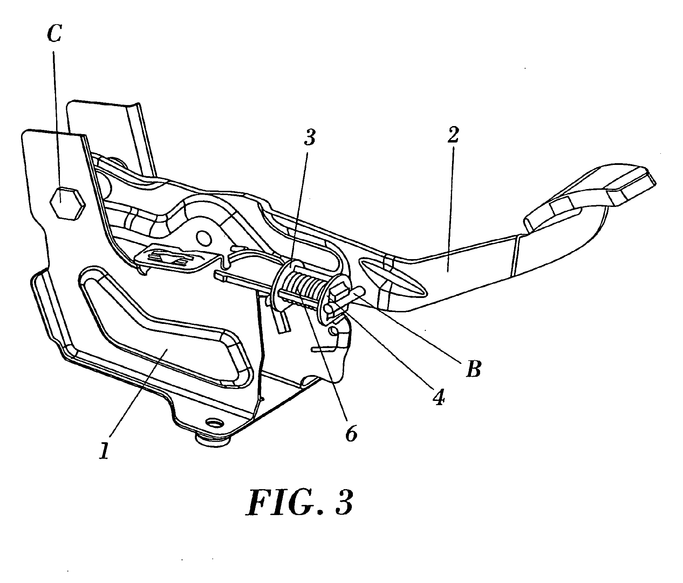

Figure 3.- It shows an overall perspective view of a pedal assembly assistance system with a parallel spring layout, in accordance with the object of the invention, in which the outer spring has been removed so that the inner spring may be appreciated.

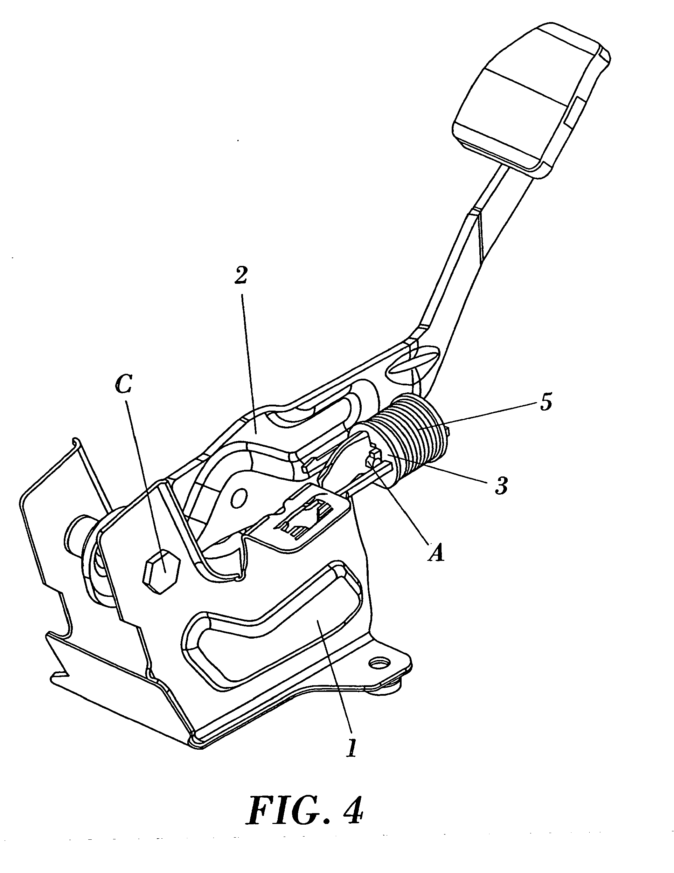

Figure 4.- It shows a rear overall perspective view of a pedal assembly assistance system with a parallel spring layout, in accordance with the object of the invention.

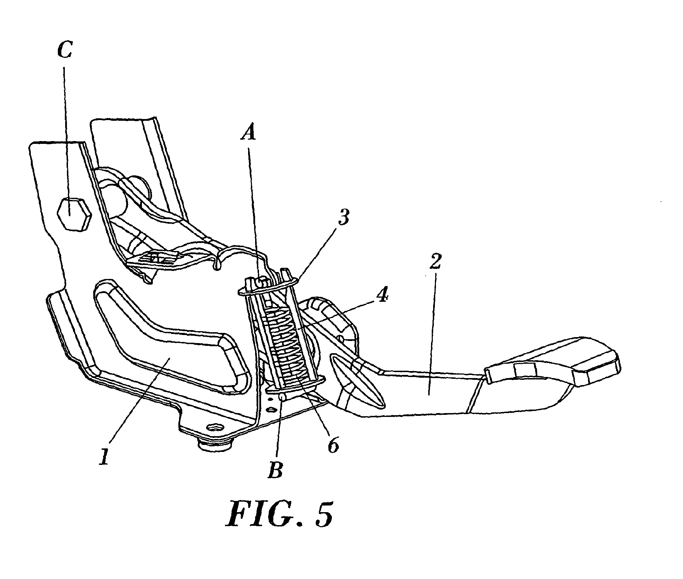

Figure 5.- It shows an overall perspective view of a pedal assembly assistance system with a parallel spring layout in which the pedal is turned and the assistance system is at its end position, wherein it may be observed that the inner spring is at its relaxed initial length and has ceased to provide assistance action. The outer spring has been removed so as to offer a clearer view.
Figure 6.- It shows an overall perspective view of a pedal assembly assistance system with a parallel spring layout, in accordance with a second embodiment as defined in the object of the invention.
Figure 7.- It shows an overall perspective view of the embodiment shown in the previous figure in which the pedal is turned and the assistance system is in its final position, wherein it may be observed that the inner spring is at its initial relaxed length resting on the bases (3) and (7) and has ceased to perform its assistance action. The outer spring has been removed so as to offer a clearer view.

### PREFERRED EMBODIMENT OF THE INVENTION

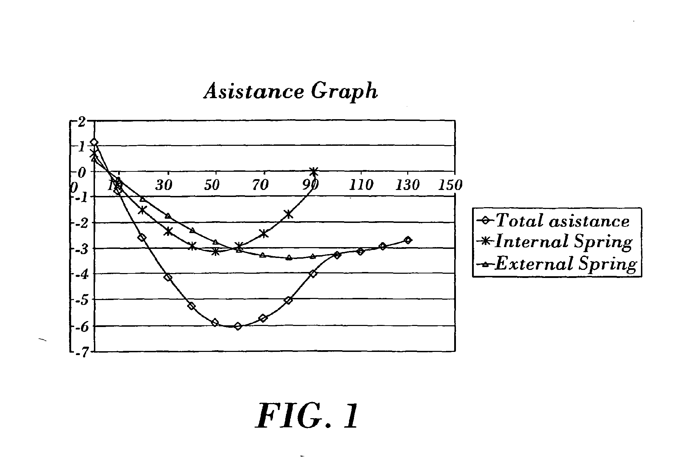

The assistance that represents the object of this invention is of application for a pedal assembly in which an assistance curve is required that is endowed with a point of change of curvature in its final part (change of the form of the assistance curve from concave to convex in its final section) or with a point of discontinuity in tangency, in its final section too, as may be seen in figure 1.

The clutch assistance for the pedal assembly that is the object of the invention is based on a parallel spring arrangement and is made up of plastic base (3) jointed by way of a shaft (A), to the pedal assembly bracket (1), a second plastic base (4) articulated by means of shaft (B) to the body of the pedal (2), both bases being installed in such a way that base (4) slides during movement of the pedal (2) in relation to base (3). The assistance consists of two parallel-mounted springs, one outer (5) and the other inner (6), which are compressed and rest their ends on the bases (3) and (4), with the distinguishing feature that the inner spring (6) has a shorter free length than the outer spring (5). Obviously, it could be the other way round, i.e. with an outer spring (5) of a shorter free length than the inner spring (6).

The clutch pedal (2) turns in relation to the support bracket (1) around axis (C) and, in the rest position, it is situated slightly below the axis of springs (4) and (5), so that in the first section of pedal movement or travel, the assistance moment provided by the springs is positive, i.e. resistant, until the axis of the springs (4) and (5) coincides with the axis of the pedal (2) and, from that position on the resisting moment becomes negative and assists pedal travel.

In the clutch assistance graph shown in Figure 1 it may be observed on the one hand the total assistance curve, which is the curve that we set out to achieve, where the clutch pedal travel is represented on the x-axis and the equivalent moment at the clutch pedal pad to offset the moment exerted by the assistance system on the y-axis, always in relation to the pedal rotation axis. In the total assistance curve we may observe the change of curvature that takes place in the final section of the curve, for a pedal travel of approximately 100 mm, although this value does not represent a restrictive aspect.

To achieve this total assistance curve, the clutch assistance system proposed consists of a parallel spring arrangement that enables the resulting force to be the direct sum of the forces of each spring. In the assistance graph we may observe the curves generated by each spring separately, namely the curve of the inner spring (6) and the curve of the outer spring (5). The sum of these two curves gives as a result the total desired assistance curve. It should be pointed out that when the pedal (2) reaches 90 mm (this value being informative but not restrictive) of inner spring travel (6) it ceases to act as it reaches its free length and is not longer compressed, this fact may be observed in the assistance of the inner spring since it becomes zero when the pedal has reached 90 mm. Thereafter, the total assistance curve coincides with the assistance curve of the outer spring (5), so that the change of tendency of the curve and the desired change of curvature are obtained.

In the different figures we may observe the assistance system composed of the plastic base (3) which rotates around the support bracket (1) by means of shaft (A), and on which rests one of the ends of the inner (6) and outer (5) springs, while the other end of both springs rests on the plastic base (4) which rotates around the shaft (B) integral with the pedal (2). The base (4) slides over base (3) while the pedal is depressed, varying the distance between shafts (A) and (B) and therefore varying the compression length of the springs.

In figure (5) we may see that the inner spring (6) has gone on increasing its length until achieving its free length, losing its support on the plastic base (3). As of that moment, when the spring (6) reaches its free length and is no longer compressed, only the outer spring (5) acts, the assistance curve being that generated by spring (5), with the result that the desired change of tendency in the total resistance curve is achieved.

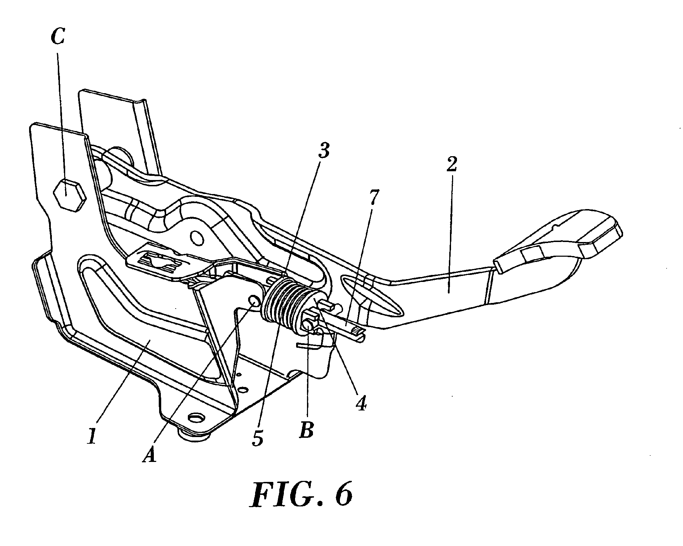

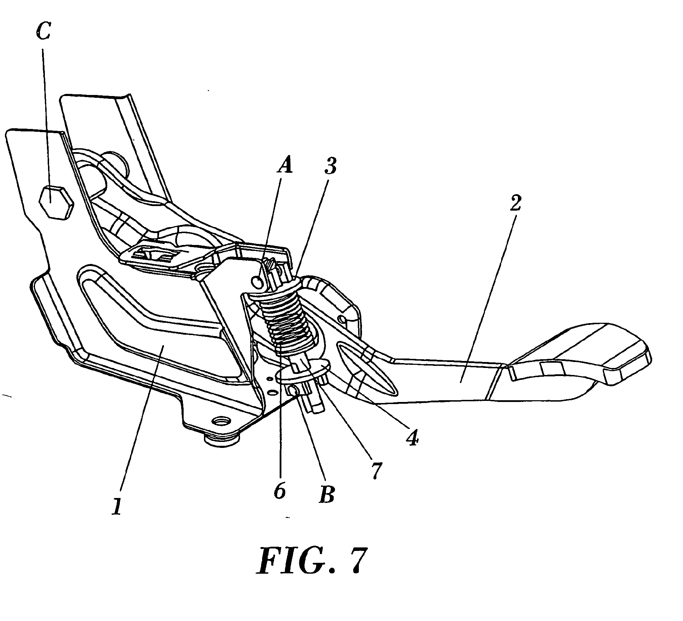

In figures 6 and 7 a second embodiment is represented in which one of the ends of the inner spring (6) does not rest on the base (4) but on a support (7) which slides in relation to bases (3) and (4).

## Claims

1. Vehicle clutch assistance system, which comprises two springs the sum of whose effects provides the assistance curve, **characterised in that** the two springs (5) and (6) are compression springs and are arranged parallel, one of them presenting a smaller free length, so that in an initial part of the pedal travel the assistance curve is the sum of the curves that would be originated individually by the springs (5) and (6), while in the final part of the pedal travel one of the springs ceases to act, the assistance curve corresponding to that originated by one of the springs only.

2. Vehicle clutch assistance system, according to claim 1, **characterised in that** the axis of the springs lies above the pedal axis, so that, until both axes are aligned, the assistance moment brought about by the springs (5) and (6) is positive, generating resistance to pedal movement, while from the time the axes are aligned, the moment produced by the springs (5) and (6) is negative and assists pedal travel.

3. Vehicle clutch assistance system, according to claim 1, **characterised in that** it is composed of two bases (3) and (4), base (3) being jointed to the pedal assembly support bracket (1), while base (4) is jointed to the actual pedal (2), the compression springs (5) and (6) being installed between the two bases (3) and (4), one inside the other, so that base (4) may slide in relation to the fixed base (3) when the pedal (2) is depressed.

4. Vehicle clutch assistance system, according to the foregoing claims, **characterised in that** one of the ends of the inner spring (6) does not rest on the base (4) but on a support (7) which slides in relation to bases (3) and (4).

## Patentansprüche

1. Fahrzeugkupplungs-Unterstützungssystem mit zwei Federn, wobei die Summe der Effekte der beiden Federn die Unterstützungskurve ergibt, **dadurch gekennzeichnet, dass** die beiden Federn (5) und (6) Druckfedern sind und parallel angeordnet sind, wobei eine der Federn eine kleinere freie Länge aufweist, derart, dass in einem Anfangsteil des Pedalbewegungswegs die Unterstützungskurve die Summe der Kurven ist, die von den Federn (5) und (6) einzeln erzeugt würden, während in dem Endteil des Pedalbewegungswegs eine der Federn aufhört, zu wirken und die Unterstützungskurve derjenigen Kurve entspricht, die nur von einer der Federn erzeugt wird.

2. Fahrzeugkupplungs-Unterstützungssystem nach Anspruch 1, **dadurch gekennzeichnet, dass** die Achse der Federn über der Pedalachse liegt, derart, dass, bis beide Achsen ausgerichtet sind, das von den Federn (5) und (6) herbeigeführte Unterstützungsmoment positiv ist, wobei es Widerstand gegen die Pedalbewegung erzeugt, während von dem Zeitpunkt an, zu dem die Achsen ausgerichtet sind, das von den Federn (5) und (6) erzeugte Moment negativ ist und die Pedalbewegung unterstützt.

3. Fahrzeugkupplungs-Unterstützungssystem nach Anspruch 1, **dadurch gekennzeichnet, dass** das System zwei Basen (3) und (4) aufweist, wobei die Basis (3) mit dem Pedalvorrichtungsstützbügel (1) gelenkig verbunden ist, während die Basis (4) mit dem eigentlichen Pedal (2) gelenkig verbunden ist, wobei die Druckfedern (5) und (6) zwischen den beiden Basen (3) und (4) angeordnet sind, und zwar eine Feder in der anderen, derart, dass die Basis (4) relativ zu der festgelegten Basis (3) gleiten kann, wenn das Pedal (2) gedrückt wird.

4. Fahrzeugkupplungs-Unterstützungssystem nach einem der vorhergehenden Ansprüche, **dadurch gekennzeichnet, dass** eines der Enden der inneren Feder (6) nicht auf der Basis (4), sondern auf einem Stützteil (7) aufliegt, das relativ zu den Basen (3) und (4) gleitet.

## Revendications

1. Système d'assistance de commande d'embrayage de véhicule qui comprend deux ressorts dont la somme des effets fournit la courbe d'assistance, **caractérisé en ce que** les deux ressorts (5) et (6) sont des ressorts à compression et sont disposés parallèles, l'un deux présentant une longueur libre plus petite, de sorte que lors d'un déplacement initial de la partie de pédale, la courbe d'assistance est la somme des courbes qui aurait été obtenue de façon individuelle par les ressorts (5) et (6), alors que lors du déplacement final de la partie de pédale, un des ressorts cesse d'agir, la courbe d'assistance correspondant à celle obtenue par seulement un des ressorts.

2. Système d'assistance de commande d'embrayage de véhicule selon la revendication 1, **caractérisé en ce que** l'axe des ressorts s'étend au dessus de l'axe de pédale de sorte que jusqu'à ce que les deux axes sont alignés, le moment d'assistance apporté par les ressorts (5) et (6) est positif, générant une résistance au mouvement de pédale alors qu'à partir du moment où les axes se sont alignés, le moment produit par les ressorts (5) et (6) est négatif et assiste le déplacement de pédale.

3. Système d'assistance de commande d'embrayage de véhicule selon la revendication 1, **caractérisé en ce qu'**il est composé de deux bases (3) et (4), la base (3) étant reliée à la console de support d'ensemble de pédale (1), alors que la base (4) est reliée à la pédale réelle (2), les ressorts de compression (5) et (6) étant disposés entre les deux bases (3) et (4), l'une à l'intérieur de l'autre, de sorte que la base (4) peut coulisser par rapport à la base fixe (3) lorsque la pédale (2) est enfoncée.

4. Système d'assistance de commande d'embrayage de véhicule selon les revendications précédentes, **caractérisé en ce que** une des extrémités du ressort interne (6) ne repose pas sur la base (4) mais sur un support (7) qui coulisse par rapport aux bases (3) et (4).
